# EUROPÄISCHE PATENTSCHRIFT

(11) **EP 3 888 447 B1**
(45) Veröffentlichungstag und Bekanntmachung des Hinweises auf die Patenterteilung: **02.08.2023**
(21) Anmeldenummer: 21162162.8
(22) Anmeldetag: 11.03.2021
(51) Int. Cl.: A01D 89/00

(54) **ERNTEVORRICHTUNG**
HARVESTING DEVICE
DISPOSITIF DE RÉCOLTE

(30) Priorität: 12.03.2020 DE 102020106804
(43) Veröffentlichungstag der Anmeldung: 06.10.2021
(73) Patentinhaber: CLAAS Saulgau GmbH, 88348 Bad Saulgau (DE)
(72) Erfinder: Boll, Ulrich, 88348 Bad Saulgau (DE)

(56) Entgegenhaltungen:
- EP-A2- 0 119 659
- US-A1- 2015 327 428
- US-B2- 7 681 382
- US-B2- 9 538 709

## Beschreibung

Die Erfindung betrifft eine Erntevorrichtung, nämlich einen Merger oder Pickup-Schwader, nach dem Oberbegriff des Anspruchs 1.

Aus der EP 2 979 529 B1 ist eine als Merger ausgebildete landwirtschaftliche Erntevorrichtung bekannt. Merger werden auch als Pickup-Schwader bezeichnet. Gemäß diesem Stand der Technik verfügt die als Merger ausgebildete Erntevorrichtung über einen Tragrahmen sowie über ein Fahrwerk. Ferner verfügt die als Merger ausgebildete Erntevorrichtung über als Pickup ausgebildete Aufnahmeorgane zum Aufnehmen von Erntegut sowie über als Bandförderer ausgebildete Querfördereinrichtungen zum Querfördern des aufgenommenen Ernteguts. Der Tragrahmen verfügt über einen Längsträger sowie über Querträger, wobei die Aufnahmeorgane und Querfördereinrichtungen an den Querträgern aufgenommen sind. Die Aufnahmeorgane sowie Querfördereinrichtungen sind klappbar, um die als Merger ausgebildete Erntevorrichtung zwischen einer Arbeitsstellung und einer Transportstellung zu überführen. Über eine am Tragrahmen angreifende Deichsel ist die als Merger ausgebildete landwirtschaftliche Erntevorrichtung an ein Zugfahrzeug koppelbar.

US 2015/327 428 A1 offenbart einen Merger mit einer Anbaubaugruppe mit einem Paar nach vorn gerichteter Kupplungen zum lösbaren Ankuppeln an einen Traktor oder ein anderes Zugfahrzeug, die über eine aufrechtstehende Drehachse schwenkbar mit einem Längsrahmen des Mergers verbunden ist.

US9538709 B2 offenbart einen pick-up header ohne Außenrahmen. EP0119659 A2 bezieht sich auf einen Feldhäcksler. US7681382 B2 offenbart eine Landwirtschaftliche Presse, die eine Deichsel und eine Stellvorrichtung umfasst. Die Stellvorrichtung soll eine bessere Anpassung des Aufnehmer an den darunter liegenden Untergrund bewirken und nicht die Manövrierfähigkeit der Ballenpresse durch durch eine Verkürzung der Länge zwischen einer Hinterachse des Zugfahrzeugs und einer Achse der Räder des Fahrwerks der Erntevorrichtung.

In der Transportstellung sowie in einer sogenannten Vorgewendestellung der Erntevorrichtung bzw. eines Zuggespanns aus einem Zugfahrzeug und der Erntevorrichtung ist ein möglichst kleiner Wendekreis bevorzugt. Bislang bereitet es Schwierigkeiten, bei einer als Merger ausgebildeten landwirtschaftlichen Erntevorrichtung einen derartigen kleinen Wendekreis bereitzustellen.

Hiervon ausgehend liegt der vorliegenden Erfindung die Aufgabe zugrunde, eine neuartige, als Merger oder Pickup-Schwader ausgebildete, Erntevorrichtung zu schaffen.

Diese Aufgabe wird durch eine Erntevorrichtung nach Anspruch 1 gelöst.

Erfindungsgemäß ist die Deichsel relativ zum Tragrahmen zur Überführung der Erntevorrichtung zwischen einer Arbeitsstellung und einer Vorgewendestellung und/oder einer Transportstellung schwenkbar.

Dadurch, dass bei der erfindungsgemäßen, als Merger ausgebildeten Erntevorrichtung die Deichsel relativ zum Tragrahmen schwenkbar ist, kann in der Vorgewendestellung und/oder Transportstellung ein kleinerer Wendekreis bereitgestellt werden als in der Arbeitsstellung. Dies kann mit relativ einfachen Mitteln ohne das Erfordernis einer komplexen Steuerung erfolgen.

Nach einer vorteilhaften Weiterbildung greift die Deichsel mit einem ersten Ende über ein Gelenk am Tragrahmen an, wobei die Deichsel bei der Überführung der Erntevorrichtung zwischen der Arbeitsstellung und der Vorgewendestellung und/oder Transportstellung um dieses Gelenk relativ zum Tragrahmen schwenkbar ist. Die Schwenkachse der Deichsel verläuft vorzugsweise senkrecht zum Längsträger. Dies ist bevorzugt, um mit einfachen Mitteln in der Vorgewendestellung und/oder Transportstellung den kleinen Wendekreis bereitzustellen.

Nach einer vorteilhaften Weiterbildung greift mindestens ein Aktuator für die Schwenkbewegung der Deichsel relativ zum Tragrahmen einerseits am Tragrahmen und anderseits an der Deichsel an, vorzugsweise derart, dass ein erster Aktuator benachbart zu einer ersten Seite einer Längsmittelachse des Längsträgers und ein zweiter Aktuator benachbart zu einer zweiten Seite der Längsmittelachse des Längsträgers einerseits am Längsträger des Tragrahmens und anderseits an der Deichsel angreift. Dies ermöglicht eine besonders vorteilhafte Schwenkbewegung der Deichsel relativ zum Tragrahmen.

Nach einer vorteilhaften Weiterbildung ist das Fahrwerk relativ zum Tragrahmen zur Überführung der Erntevorrichtung zwischen der Arbeitsstellung und der Vorgewendestellung und/oder Transportstellung schwenkbar. Vorzugsweise greift hierzu das Fahrwerk über ein Gelenk am Tragrahmen an, wobei das Fahrwerk bei der Überführung der Erntevorrichtung zwischen der Arbeitsstellung und der Vorgewendestellung und/oder Transportstellung um dieses Gelenk relativ zum Tragrahmen schwenkbar ist. Dann, wenn auch das Fahrwerk relativ zum Tragrahmen schwenkbar ist, kann der Wendekreis noch stärker verkleinert werden.

Vorzugsweise greift mindestens ein Aktuator für die Schwenkbewegung des Fahrwerks relativ zum am Tragrahmen einerseits am Tragrahmen und anderseits am Fahrwerk an, insbesondere derart, dass der Aktuator im Bereich einer Längsmittelachse des Längsträgers einerseits am Längsträger und anderseits am Fahrwerk angreift.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine perspektivische Ansicht von oben auf ein Zuggespann, welches eine als Merger oder Pickup-Schwader ausgebildete Erntevorrichtung und ein Zugfahrzeug umfasst, in Arbeitsstellung;
- Fig. 2: das Zuggespann der Fig. 1 in Seitenansicht in Arbeitsstellung in Seitenansicht;
- Fig. 3: die Erntevorrichtung in Alleindarstellung in Arbeitsstellung in Seitenansicht;
- Fig. 4: das Zuggespann der Fig. 2 in Seitenansicht in Vorgewendestellung in Seitenansicht;
- Fig. 5: die Erntevorrichtung in Alleindarstellung in Vorgewendestellung in Seitenansicht;
- Fig. 6: die Erntevorrichtung in Alleindarstellung in Arbeitsstellung in Draufsicht.

Die Erfindung betrifft eine als Merger ausgebildete Erntevorrichtung. Eine solche Erntevorrichtung wird auch als Pickup-Schwader bezeichnet.

Die Erntevorrichtung 10 verfügt über einen Tragrahmen 11 mit einem Längsträger 12 sowie Querträgern 13, 14. Über den Längsträger 12, nämlich eine - am vorderen Ende des Längsträgers 12 angreifende - Deichsel 15, ist die Erntevorrichtung 10 an ein Zugfahrzeug 100 ankoppelbar, um vom Zugfahrzeug 100 entlang eines zu bearbeitenden Untergrunds gezogen zu werden.

Der Längsträger 12 erstreckt sich dabei in Zugrichtung bzw. Ernterichtung, Die Querträger 13, 14 erstrecken sich quer oder senkrecht hierzu.

Die Erntevorrichtung 10 verfügt weiterhin über ein Fahrwerk 16 mit Rädern 17. Das Fahrwerk 16 wird auch als Hauptfahrwerk bezeichnet.

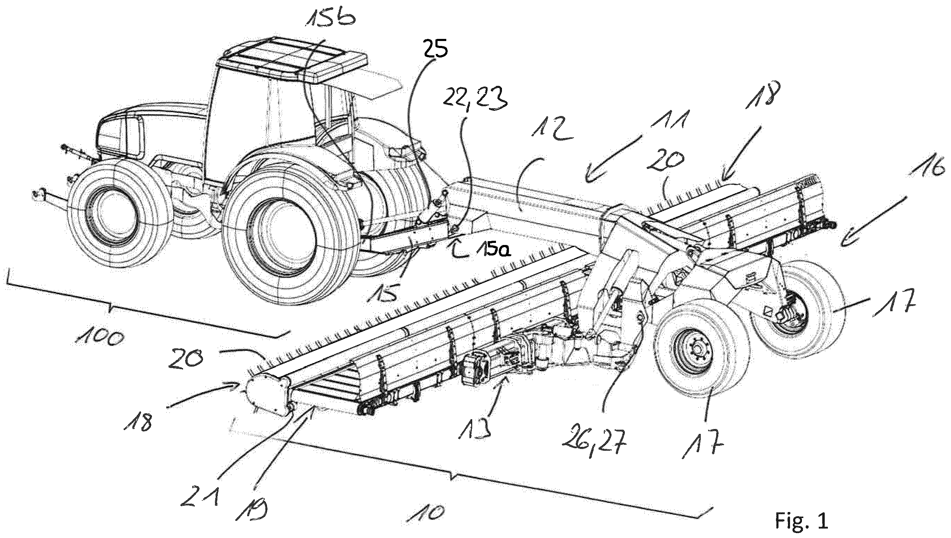

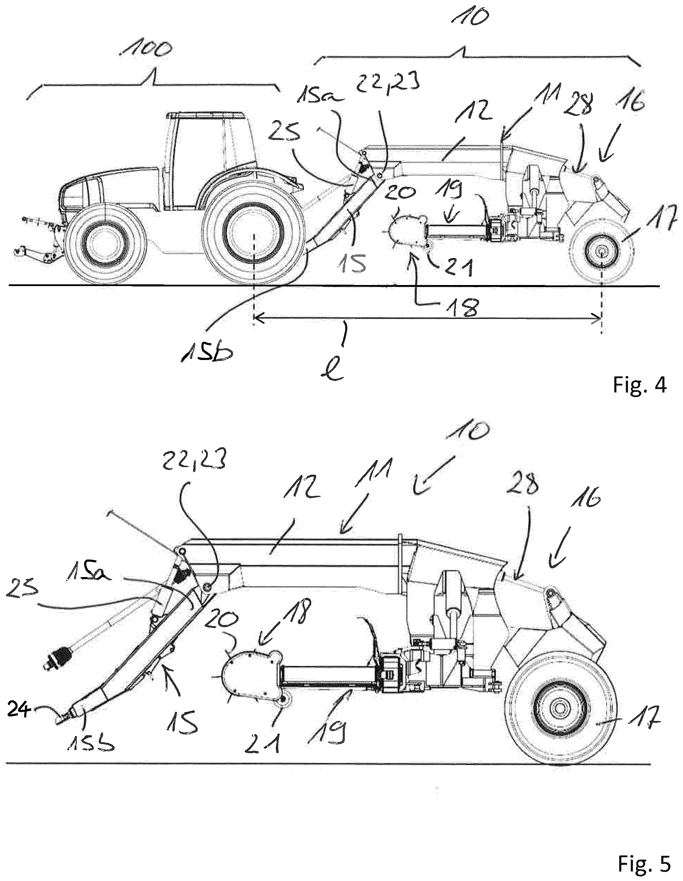

Über die Räder 17 des Fahrwerks 16 stützt sich sowohl in einer Arbeitsstellung (siehe Fig. 1, 2, 3, 6) als auch in einer Transportstellung (nicht gezeigt) sowie in einer Vorgewendestellung (siehe Fig. 4, 5) die als Merger ausgebildete Erntevorrichtung 10 auf einem zu bearbeitenden bzw. zu befahrenden Untergrund ab.

Die Erntevorrichtung 10 verfügt weiterhin über Aufnahmeorgane 18 sowie Querfördereinrichtungen 19.

Die Aufnahmeorgane 18 der Erntevorrichtung 10 sind als sogenannte Pickups ausgebildet und dienen dem Aufnehmen von Erntegut vom zu bearbeitenden Untergrund. Zu einer ersten Seite des Längsträgers 12 ist mindestens ein Aufnahmeorgan 18 an dem Querträger 13 aufgenommen, an einer zweiten Seite des Längsträgers 12 ist mindestens ein Aufnahmeorgan 18 an dem Querträger 14 aufgenommen.

Die Aufnahmeorgane 18 verfügen dabei über Aufnahmezinken 20, die zum Aufnehmen des Ernteguts vom Boden um eine sich in Querrichtung erstreckende Achse angetrieben werden. Jedes der Aufnahmeorgane 18 stützt sich in der Arbeitsstellung (siehe Fig. 1, 2, 3) der Erntevorrichtung 10 über Tasträder 21 auf dem zu bearbeitenden Untergrund ab. In einer Vorgewendestellung (siehe Fig. 4, 5) sind die Tasträder 21 vom zu bearbeitenden Untergrund abgehoben.

Wie bereits ausgeführt, verfügt die Erntevorrichtung 10 zusätzlich zu den Aufnahmeorganen 18 über die Querfördereinrichtungen 19.

Die Querfördereinrichtungen 19 der Erntevorrichtung 10 sind als Bandförderer ausgebildet, wobei über die Querfördereinrichtungen 19 das über die Aufnahmeorgane 18 vom zu bearbeitenden Untergrund aufgenommene Erntegut in einer sich zur Längsrichtung quer bzw. senkrecht erstreckenden Querförderrichtung transportierbar ist.

Zu der ersten Seite des Längsträgers 12 ist mindestens eine Querfördereinrichtung 19 an dem ersten Querträger 13 aufgenommen, zu der zweiten Seite des Längsträgers 12 ist mindestens eine weitere Querfördereinrichtung 19 an dem zweiten Querträger 14 aufgenommen, wobei beide dieser Querfördereinrichtungen 19 als Bandförderer ausgeführt sind.

Wie den Zeichnungen entnommen werden kann, sind in Ernterichtung bzw. Zugrichtung der Erntevorrichtung gesehen, die Querfördereinrichtungen 19 hinter den Aufnahmeorganen 18 angeordnet.

Die Deichsel 15 ist relativ zum Tragrahmen 11 schwenkbar, und zwar zur Überführung der Erntevorrichtung 10 zwischen einer Arbeitsstellung und einer Vorgewendestellung und/oder zur Überführung der Erntevorrichtung zwischen der Arbeitsstellung und/oder einer Transportstellung.

So greift die Deichsel 15 mit einem ersten Ende 15a über ein Gelenk 22, welches eine Schwenkachse 23 definiert, am Tragrahmen 11, nämlich am Längsträger 12 des Tragrahmens 11, gelenkig an. Die Deichsel 15 ist bei der Überführung der Erntevorrichtung 10 zwischen der Arbeitsstellung und der Vorgewendestellung und/oder der Transportstellung um dieses Gelenk 22 und damit die vom Gelenk 22 bereitgestellte Schwenkachse 23 relativ zum Tragrahmen 11, und zwar relativ zum Längsträger 12 des Tragrahmens 11, schwenkbar. Diese Schwenkachse 23 verläuft etwa waagerecht in Querrichtung und damit senkrecht zum Längsträger 12.

Über ein zweites Ende 15b der Deichsel 15 ist die Erntevorrichtung 10 an das Erntefahrzeug 100 koppelbar. An diesem zweiten Ende 15b ist eine Anhängeeinrichtung 24 ausgebildet, über welche letztendlich die Anbindung der Erntevorrichtung 10 an das Zugfahrzeug 100 erfolgt. Im gezeigten Ausführungsbeispiel ist diese Anhängeeinrichtung 24 dabei als Kugel-Anhängeeinrichtung ausgebildet, und zwar derart, dass eine am zweiten Ende 15b der Deichsel 15 befestigte Kugelschale an einer entsprechenden Kugel des Zugfahrzeugs 100 ankoppelbar ist. Alternativ zu einer solchen Kugel-Anhängeeinrichtung kann auch eine Unterlenker-Anhängeeinrichtung vorhanden sein.

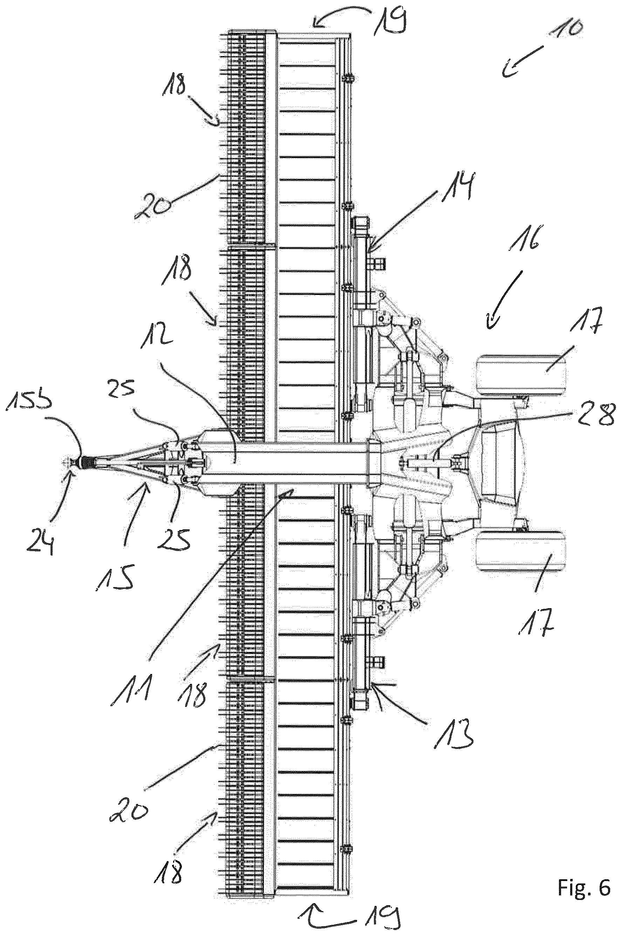

Zur Bereitstellung der Schwenkverlagerung zwischen der Deichsel 15 und dem Tragrahmen 11 dient mindestens ein Aktuator 25, der einerseits an der Deichsel 15 und andererseits am Tragrahmen 11 angreift. Wie am besten Fig. 6 entnommen werden kann, greift ein erster Aktuator 25 für die Schwenkbewegung der Deichsel 15 relativ zum Tragrahmen 11 zu einer ersten Seite einer Längsmittelachse des Längsträgers 12 und ein zweiter Aktuator 25 benachbart zu einer zweiten Seite der Längsmittelachse des Längsträgers 12 einerseits am Längsträger 12 des Tragrahmens 11 und andererseits an der Deichsel 15 an. Hierdurch kann eine besonders vorteilhafte Schwenkbewegung zwischen der Deichsel 15 und dem Tragrahmen 11 gewährleistet werden.

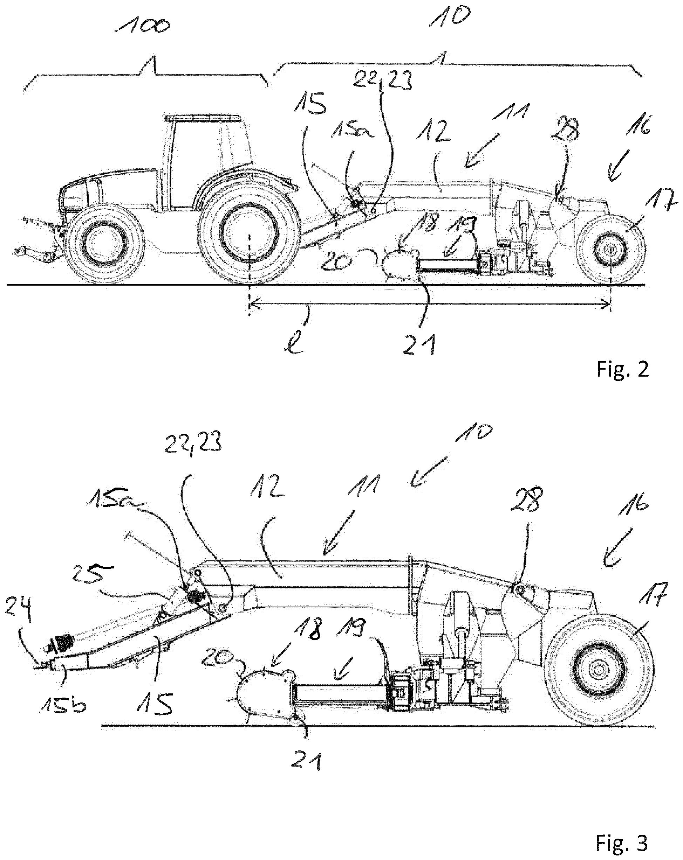

Bei der Überführung der Erntevorrichtung 10 ausgehend von der in Fig. 2 und 3 gezeigten Arbeitsstellung in die in Fig. 4 und 5 gezeigte Vorgewendestellung wird die Deichsel 15 nach oben geschwenkt, wodurch der Längsträger 12 des Tragrahmens 11 nach oben und vorne verlagert wird. Hierbei verkürzt sich dann eine Länge l zwischen einer Hinterachse des Zugfahrzeugs 100 und einer Achse der Räder 17 des Fahrwerks 16 der Erntevorrichtung 10, wodurch ein kleinerer Wendekreis in der Vorgewendestellung gewährleistet werden kann.

Nach einer vorteilhaften Weiterbildung der Erfindung ist auch das Fahrwerk 16 der Erntevorrichtung 10 relativ zum Tragrahmen 11 zur Überführung der Erntevorrichtung zwischen der Arbeitsstellung und der Vorgewendestellung und/oder der Transportstellung schwenkbar. So ist das Fahrwerk 16 über ein Gelenk 26, welches eine Schwenkachse 27 bereitstellt (siehe Fig. 1), am Tragrahmen 11 schwenkbar befestigt. Das Fahrwerk 16 ist bei der Überführung der Erntevorrichtung 10 zwischen der Arbeitsstellung und der Vorgewendestellung und/oder Transportstellung um dieses Gelenk 26 und damit die vom Gelenk 26 bereitgestellte Schwenkachse 27 relativ zum Tragrahmen 11 schwenkbar, wobei diese Schwenkachse 27 wiederum in Querrichtung und damit senkrecht zum Längsträger 12 verläuft.

Zur Verlagerung des Fahrwerks 16 relativ zum Tragrahmen 11 dient wiederum ein Aktuator 28, der einerseits am Tragrahmen 11 und andererseits am Fahrwerk 16 angreift.

Wie Fig. 6 entnommen werden kann, greift dieser Aktuator 28 für die Schwenkbewegung des Fahrwerks 16 relativ zum Tragrahmen 11 im Bereich der Längsmittelachse des Längsträgers 12 einerseits am Längsträger 12 und andererseits am Fahrwerk 16 an.

Durch diese Verlagerung des Fahrwerks 16 relativ zum Tragrahmen 11 bei der Überführung der Erntevorrichtung 10 in die Vorgewendestellung bzw. Transportstellung kann die Länge l zwischen der Hinterachse des Zugfahrzeugs 100 und der Achse der Räder 17 des Fahrwerks 16 der Erntevorrichtung 10 und damit der Wendekreis weiter verkürzt werden.

Die Aktuatoren 25, 28 der Deichsel 15 und des Fahrwerks 16 können wahlweise unabhängig voneinander oder gleichzeitig angesteuert werden. Es ist auch möglich die Aktuatoren 25, 28 zeitversetzt anzusteuern. Besonders vorteilhaft können die Aktuatoren 25, 28 der Deichsel 15 und des Fahrwerks 16 so aufeinander abgestimmt angesteuert bzw. eingestellt werden, dass die Erntevorrichtung 10 ideal an die jeweiligen Erntebedingungen angepasst werden kann. Durch eine entsprechende Abstimmung der Schwenkstellung der Deichsel 15 zur Schwenkstellung des Fahrwerks 16 kann die Neigung der Erntevorrichtung 10 in Fahrtrichtung gesehen verändert werden. Insbesondere durch die Veränderung der Neigung der Querfördereinrichtung 19 kann die Übergabe des Ernteguts von einem Aufnahmeorgan 18 auf das Förderband verbessert werden. Bei einer Erntefahrt an einer Steigung könnte der Aktuator 28 des Fahrwerks 16 so angesteuert werden, dass der Längsträger 12 hinten angehoben wird, so dass die Erntevorrichtung 10 und damit insbesondere die Querfördereinrichtung 19 waagerechter ausgerichtet ist, so dass das Erntegut gleichmäßiger auf dem Förderband verteilt wird und die Förderleistung verbessert wird.

Bei den Aktuatoren 25, 28 handelt es sich vorzugsweise um Hydraulikzylinder und demnach um hydraulische Aktuatoren.

Die Verlagerungsbewegung zwischen dem Tragrahmen 11 und der Deichsel 15 sowie die Verlagerungsbewegung zwischen dem Tragrahmen 11 und dem Fahrwerk 16 kann über Dämpfer gedämpft sein.

Mit der Erfindung ist es nicht nur möglich, einen kleineren Wendekreis in der Vorgewendestellung sowie Transportstellung bereitzustellen, vielmehr kann auch mehr Aushub für die Aufnahmeorgane 18 gewährleistet werden.

### Bezugszeichenliste

- 10: Erntevorrichtung
- 11: Tragrahmen
- 12: Längsträger
- 13: Querträger
- 14: Querträger
- 15: Deichsel
- 15a: Ende
- 15b: Ende
- 16: Fahrwerk
- 17: Rad
- 18: Aufnahmeorgan
- 19: Querfördereinrichtung
- 20: Aufnahmezinken
- 21: Tastrad
- 22: Gelenk
- 23: Schwenkachse
- 24: Anhängeeinrichtung
- 25: Aktuator
- 26: Gelenk
- 27: Schwenkachse
- 28: Aktuator

- 100: Zugfahrzeug

## Patentansprüche

1. Erntevorrichtung, nämlich Merger oder Pickup-Schwader,
mit einem einen Längsträger (12) und Querträger (13, 14) aufweisenden Tragrahmen (11),
mit einem Räder (17) aufweisenden Fahrwerk (16),
mit einer am Tragrahmen (11) angreifenden Deichsel (15), über welche die Erntevorrichtung an ein Zugfahrzeug koppelbar ist,
mit als Pickup ausgebildeten Aufnahmeorganen (18) zum Aufnehmen von Erntegut, wobei zu einer ersten Seite des Längsträgers (12) mindestens ein Aufnahmeorgan (18) und zu einer zweiten Seite des Längsträgers (12) mindestens ein weiteres Aufnahmeorgan (18) jeweils an einem Querträger (13, 14) aufgenommen ist,
mit als Bandförderer ausgebildeten Querfördereinrichtungen (19) zum Fördern des aufgenommenen Ernteguts in einer quer zu einer Längsrichtung verlaufenden Querförderrichtung, wobei zu einer ersten Seite des Längsträgers (12) mindestens eine Querfördereinrichtung (19) und zu einer zweiten Seite des Längsträgers (12) mindestens eine weitere Querfördereinrichtung (19) an dem jeweiligen Querträger (13, 14) aufgenommen ist, wobei
die Deichsel (15) relativ zum Tragrahmen (11) schwenkbar ist,
**dadurch gekennzeichnet, dass**
zur Überführung der Erntevorrichtung zwischen einer Arbeitsstellung und einer Vorgewendestellung und/oder einer Transportstellung eine Schwenkachse (23) der Deichsel (15) in etwa waagerechter Richtung senkrecht zum Längsträger (12) des Tragrahmens (11) verläuft.

2. Erntevorrichtung nach Anspruch 1, **dadurch gekennzeichnet, dass** die Deichsel (15) mit einem ersten Ende (15a) über ein Gelenk (22) am Tragrahmen (11) angreift, wobei die Deichsel (15) bei der Überführung der Erntevorrichtung zwischen der Arbeitsstellung und der Vorgewendestellung und/oder Transportstellung um dieses Gelenk (22) relativ zum Tragrahmen (11) schwenkbar ist.

3. Erntevorrichtung nach einem der Ansprüche 1 oder 2, **dadurch gekennzeichnet, dass** mindestens ein Aktuator (25) für die Schwenkbewegung der Deichsel (15) relativ zum Tragrahmen (11) einerseits am Tragrahmen (11) und anderseits an der Deichsel (15) angreift.

4. Erntevorrichtung nach Anspruch 3, **dadurch gekennzeichnet, dass** ein erster Aktuator (25) benachbart zu einer ersten Seite einer Längsmittelachse des Längsträgers (12) des Tragrahmens (11) und ein zweiter Aktuator (25) benachbart zu einer zweiten Seite der Längsmittelachse des Längsträgers (12) des Tragrahmens (11) einerseits am Längsträger (12) des Tragrahmens (11) und anderseits an der Deichsel (15) angreift.

5. Erntevorrichtung nach einem der Ansprüche 1 bis 4, **dadurch gekennzeichnet, dass** die Deichsel (15) mit einem zweiten Ende (15b) über eine Anhängeeinrichtung (24) an das Erntefahrzeug koppelbar ist.

6. Erntevorrichtung nach Anspruch 5, **dadurch gekennzeichnet, dass** die Anhängeeinrichtung (24) eine Unterlenker-Anhängeeinrichtung oder eine Kugel-Anhängeeinrichtung ist.

7. Erntevorrichtung nach einem der Ansprüche 1 bis 6, **dadurch gekennzeichnet, dass** das Fahrwerk (16) relativ zum Tragrahmen (11) zur Überführung der Erntevorrichtung zwischen der Arbeitsstellung und der Vorgewendestellung und/oder Transportstellung schwenkbar ist.

8. Erntevorrichtung nach Anspruch 7, **dadurch gekennzeichnet, dass** das Fahrwerk (16) über ein Gelenk (26) am Tragrahmen (22) angreift, wobei das Fahrwerk (16) bei der Überführung der Erntevorrichtung zwischen der Arbeitsstellung und der Vorgewendestellung und/oder Transportstellung um dieses Gelenk (26) relativ zum Tragrahmen (22) schwenkbar ist.

9. Erntevorrichtung nach Anspruch 7 oder 8, **dadurch gekennzeichnet, dass** eine Schwenkachse (27) des Fahrwerks (16) senkrecht zum Längsträger (12) des Tragrahmens (11) verläuft.

10. Erntevorrichtung nach einem der Ansprüche 7 bis 9, **dadurch gekennzeichnet, dass** mindestens ein Aktuator (28) für die Schwenkbewegung des Fahrwerks (16) relativ zum Tragrahmen (11) einerseits am Tragrahmen (11) und anderseits am Fahrwerk (16) angreift.

11. Erntevorrichtung nach Anspruch 10, **dadurch gekennzeichnet, dass** der Aktuator (28) im Bereich einer Längsmittelachse des Längsträgers (12) des Tragrahmens (11) einerseits am Längsträger (12) des Tragrahmens (11) und anderseits am Fahrwerk (16) angreift.

## Claims

1. Harvesting apparatus, namely merger or pickup swather,
with a supporting frame (11) having a longitudinal member (12) and crossmembers (13, 14),
with a chassis (16) having wheels (17),
with a drawbar (15) which engages on the supporting frame (11) and via which the harvesting apparatus can be coupled to a tractor,
with pickup members (18) designed as a pickup for picking up harvested crop, wherein at least one pickup member (18) is accommodated on a first side of the longitudinal member (12) and at least one further pickup member (18) is accommodated on a second side of the longitudinal member (12), in each case on a crossmember (13, 14),
with transverse conveyor devices (19) designed as belt conveyors for conveying the picked-up harvested crop in a transverse conveying direction running transversely with respect to a longitudinal direction, wherein at least one transverse conveyor device (19) is accommodated on a first side of the longitudinal member (12) and at least one further transverse conveyor device (19) is accommodated on a second side of the longitudinal member (12), on the respective crossmember (13, 14), wherein
the drawbar (15) is pivotable relative to the supporting frame (11),
**characterized in that**
a pivot axis (23) of the drawbar (15) runs in an approximately horizontal direction perpendicularly to the longitudinal member (12) of the supporting frame (11) for transferring the harvesting apparatus between a working position and a headland position and/or a transport position.

2. Harvesting apparatus according to Claim 1, **characterized in that** the drawbar (15) engages at a first end (15a) via a joint (22) on the supporting frame (11), wherein the drawbar (15) is pivotable relative to the supporting frame (11) about said joint (22) when the harvesting apparatus is transferred between the working position and the headland position and/or transport position.

3. Harvesting apparatus according to either of Claims 1 and 2, **characterized in that** at least one actuator (25) for the pivoting movement of the drawbar (15) relative to the supporting frame (11) engages at one end on the supporting frame (11) and at the other end on the drawbar (15) .

4. Harvesting apparatus according to Claim 3, **characterized in that** a first actuator (25) adjacent to a first side of a longitudinal centre axis of the longitudinal member (12) of the supporting frame (11) and a second actuator (25) adjacent to a second side of the longitudinal centre axis of the longitudinal member (12) of the supporting frame (11) engages at one end on the longitudinal member (12) of the supporting frame (11) and at the other end on the drawbar (15).

5. Harvesting apparatus according to one of Claims 1 to 4, **characterized in that** the drawbar (15) can be coupled at a second end (15b) to the harvesting vehicle via a hitch device (24).

6. Harvesting apparatus according to Claim 5, **characterized in that** the hitch device (24) is a lower-link hitch device or a ball-type hitch device.

7. Harvesting apparatus according to one of Claims 1 to 6, **characterized in that** the chassis (16) is pivotable relative to the supporting frame (11) for transferring the harvesting apparatus between the working position and the headland position and/or transport position.

8. Harvesting apparatus according to Claim 7, **characterized in that** the chassis (16) engages on the supporting frame (22) via a joint (26), wherein the chassis (16) is pivotable relative to the supporting frame (22) about said joint (26) when the harvesting apparatus is transferred between the working position and the headland position and/or transport position.

9. Harvesting apparatus according to Claim 7 or 8, **characterized in that** a pivot axis (27) of the chassis (16) runs perpendicularly to the longitudinal member (12) of the supporting frame (11).

10. Harvesting apparatus according to one of Claims 7 to 9, **characterized in that** at least one actuator (28) for the pivoting movement of the chassis (16) relative to the supporting frame (11) engages at one end on the supporting frame (11) and at the other end on the chassis (16) .

11. Harvesting apparatus according to Claim 10, **characterized in that** the actuator (28) engages in the region of a longitudinal centre axis of the longitudinal member (12) of the supporting frame (11) at one end on the longitudinal member (12) of the supporting frame (11) and at the other end on the chassis (16).

## Revendications

1. Dispositif de récolte, à savoir andaineur à tapis ou de ramassage,
avec un cadre porteur (11) présentant un support longitudinal (12) et des supports transversaux (13, 14),
avec un châssis (16) présentant des roues (17),
avec un timon (15) agissant sur le cadre porteur (11), par l'intermédiaire duquel le dispositif de récolte peut être accouplé à un véhicule tracteur,
avec des organes de ramassage (18) réalisés sous forme de ramasseur pour ramasser le produit récolté, au moins un organe de ramassage (18) étant prévu sur un premier côté du support longitudinal (12) et au moins un autre organe de ramassage (18) étant prévu sur un deuxième côté du support longitudinal (12), respectivement sur un support transversal (13, 14),
avec des appareils de transport transversal (19) réalisés sous forme de transporteurs à bande pour transporter le produit récolté ramassé dans une direction de transport transversale s'étendant transversalement à une direction longitudinale, au moins un appareil de transport transversal (19) étant logé sur un premier côté du support longitudinal (12) et au moins un autre appareil de transport transversal (19) étant logé sur un deuxième côté du support longitudinal (12) sur le support transversal respectif (13, 14),
le timon (15) pouvant pivoter par rapport au cadre porteur (11),
**caractérisé en ce que**
pour le transfert du dispositif de récolte entre une position de travail et une position de tournière et/ou une position de transport, un axe de pivotement (23) du timon (15) s'étend dans une direction à peu près horizontale perpendiculairement au support longitudinal (12) du cadre porteur (11).

2. Dispositif de récolte selon la revendication 1, **caractérisé en ce que** le timon (15) agit par une première extrémité (15a) sur le cadre porteur (11) par l'intermédiaire d'une articulation (22), le timon (15) pouvant pivoter autour de cette articulation (22) par rapport au cadre porteur (11) lors du passage du dispositif de récolte entre la position de travail et la position de tournière et/ou la position de transport.

3. Dispositif de récolte selon l'une quelconque des revendications 1 ou 2, **caractérisé en ce qu'**au moins un actionneur (25) pour le mouvement de pivotement du timon (15) par rapport au cadre porteur (11) agit d'une part sur le cadre porteur (11) et d'autre part sur le timon (15) .

4. Dispositif de récolte selon la revendication 3, **caractérisé en ce qu'**un premier actionneur (25) voisin d'un premier côté d'un axe central longitudinal du support longitudinal (12) du cadre porteur (11) et un deuxième actionneur (25) voisin d'un deuxième côté de l'axe central longitudinal du support longitudinal (12) du cadre porteur (11) agissent d'une part sur le support longitudinal (12) du cadre porteur (11) et d'autre part sur le timon (15).

5. Dispositif de récolte selon l'une quelconque des revendications 1 à 4, **caractérisé en ce que** le timon (15) peut être accouplé au véhicule de récolte par une deuxième extrémité (15b) par l'intermédiaire d'un appareil d'attelage (24).

6. Dispositif de récolte selon la revendication 5, **caractérisé en ce que** l'appareil d'attelage (24) est un appareil d'attelage à bras inférieur ou un appareil d'attelage à boule.

7. Dispositif de récolte selon l'une quelconque des revendications 1 à 6, **caractérisé en ce que** le châssis (16) peut pivoter par rapport au cadre porteur (11) pour le transfert du dispositif de récolte entre la position de travail et la position de tournière et/ou la position de transport.

8. Dispositif de récolte selon la revendication 7, **caractérisé en ce que** le châssis (16) agit sur le cadre porteur (22) par l'intermédiaire d'une articulation (26), le châssis (16) pouvant pivoter autour de cette articulation (26) par rapport au cadre porteur (22) lors du passage du dispositif de récolte entre la position de travail et la position de fourrière et/ou la position de transport.

9. Dispositif de récolte selon la revendication 7 ou 8, **caractérisé en ce qu'**un axe de pivotement (27) du châssis (16) s'étend perpendiculairement au support longitudinal (12) du cadre porteur (11).

10. Dispositif de récolte selon l'une quelconque des revendications 7 à 9, **caractérisé en ce qu'**au moins un actionneur (28) pour le mouvement de pivotement du châssis (16) par rapport au cadre porteur (11) agit d'une part sur le cadre porteur (11) et d'autre part sur le châssis (16).

11. Dispositif de récolte selon la revendication 10, **caractérisé en ce que** l'actionneur (28) agit, dans la zone d'un axe central longitudinal du support longitudinal (12) du cadre porteur (11), d'une part sur le support longitudinal (12) du cadre porteur (11) et d'autre part sur le châssis (16).
